# EUROPEAN PATENT APPLICATION

(11) **EP 1 309 221 A1**
(43) Date of publication of application: **07.05.2003**
(21) Application number: 02024541.1
(22) Date of filing: 31.10.2002
(51) Int. Cl.: H04Q 11/04

(54) **System and method for delivering telecommunications services to customer premises**

(30) Priority: 02.11.2001 US 350231 P; 18.12.2001 US 25351
(71) Applicant: ALCATEL, 75008 Paris (FR)
(72) Inventor: Power, Gerard L., Plano, TX 75075 (US); Pantalis, Tim J., McKinney, TX 75075 (US); Lulashnyk, Leslie J., Frisco, TX 75034 (US); Belfer, Ellis S., Richardson, TX 75080 (US); Bussey, Christopher J., Richardson, TX 75080 (US)
(74) Representative: Dreiss, Fuhlendorf, Steimle & Becker

(57) **Abstract**

A telecommunications network 10 is described that comprises a terminal exchange facility 18 which allows for the interconnection of telecommunication service providers such as interexchange and local exchange carriers 44, 56, 57 and 58 to various buildings 28, 30 and 32. Terminal network links 14 and 16 are connected to customers within a building 28 through TDM multiplexing system 22 and packet routing system 24, respectively. An interchange carrier point of presence 44 is connected to a TDM terminal network link 52 and a packet terminal network link 54 through TDM multiplexer 48 and a packet router system 50, respectively. The various components of the terminal network 21 are interconnected and cross connected using TDM cross connect system 34 and packet router system 40 within terminal exchange facility 18. TDM network components are administered using a TDM administration system 38. Packet network components are administered and provisioned using a packet administration system 42.

## Description

### TECHNICAL FIELD OF THE INVENTION

This invention relates in general to the field of telecommunications systems and more particularly to an improved system and method for delivering telecommunications services to premises.

### BACKGROUND OF THE INVENTION

One of the most important changes in the telecommunications infrastructure is the increased demand for higher bandwidth capability within the telecommunications network. This has resulted, for example, in the use of more and more fiber optic technology in the core network. Fiber optic technologies have a dramatically greater data transmission capacity than the copper cables they typically replace. Fiber optic cable and fiber optic transmission equipment has proliferated within the core network and in some metro networks, but is still not ubiquitous within the telecommunications infrastructure. For example, the most difficult portion of the telecommunications network to upgrade is the so called "last mile" of the network which comprises the portion of the telecommunications network which connects to the customer. The last mile is difficult to upgrade because it is by definition the most diffused and diverse part of the network and, therefore, is the largest, most inconvenient, and expensive portion of the network to change.

A variety of techniques have been used to increase the bandwidth of the connection to the customer in the last mile of the telecommunications network. For example, fixed radio and line of sight laser installations have been used to increase the bandwidth to a particular building or home without necessitating the burying of fiber optic cable. A more robust solution has recently been developed by CityNet, Inc. which provides for the placement of new fiber optic cables through the sewer network connecting virtually all buildings and homes in metropolitan and suburban areas. Using this technique, automated robotic systems are used to run and fix stainless steel conduit within the sewer systems and fiber optic cable can then be pushed through the stainless steel conduit. While the physical connections are much easier to create using these technologies, the ability to deliver services through these last mile connections has not been addressed to the same degree of efficacy. The deployment of fiber optic cable to these buildings and homes represents a substantial capital investment and the deployment of these facilities has been hampered by the fact that this capital investment can only be justified if long-term relationships are established with the tenants, owners of the building, or with the companies providing telecommunications services.

### SUMMARY OF THE INVENTION

Accordingly, a need has arisen for an improved telecommunications network architecture and method of operation that provides for more efficient utilization of deployed high bandwidth telecommunications infrastructure.

In accordance with the teachings of the present invention, the telecommunications architecture and method of operation are provided that substantially eliminate or reduce problems associated with prior techniques and architectures.

In accordance with one embodiment of the present invention, a telecommunications system comprises a terminal fiber optic link deployed between a first customer premises and a terminal exchange facility system. TDM-like, packet, or other suitable transmission technology routing systems, such as ATM, and WDM-like, and others may be located at the premises to provide access to the terminal link by customers within the building. Cross connect and routing systems at the terminal exchange facility allow the interconnection of various premises with various exchange carriers.

An important technical advantage of the present invention inheres in the fact that the network architecture and method of operation of the present invention allow for the terminal portion of the telecommunication network to be shared by multiple service providers through the use of cross connect and routing equipment in the terminal network and multiplexing and routing equipment at the customer premises site. This allows the large capital expenditure associated with the creation of the terminal portion of the network to be allocated more efficiently among many different customers and many different telecommunication service providers. In addition, the flexibility inherent in the architecture of the present invention allows for the provision of customizable levels of telecommunication voice and data services to particular customers. This greater granularity of service further provides for a more economical and efficient use of the expensive terminal network resources.

### BRIEF DESCRIPTION OF THE DRAWINGS

A more complete understanding of the present invention may be acquired by referring to the accompanying figures in which like reference numbers indicate like features and wherein:

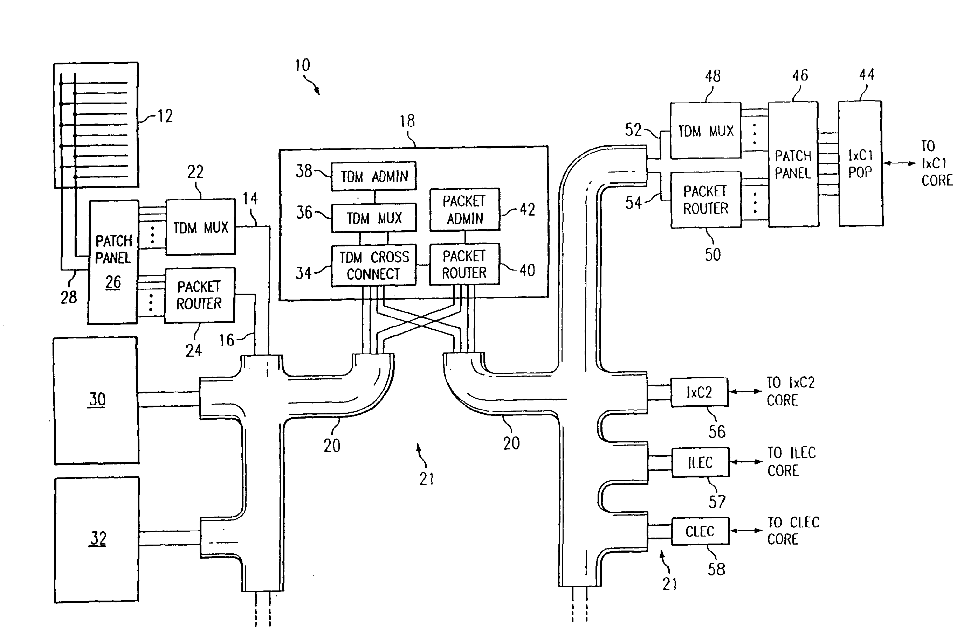

FIGURE 1 is a schematic block diagram illustrating the construction and operation of one embodiment of a telecommunications network constructed according to the teachings of the present invention.

### DETAILED DESCRIPTION OF THE INVENTION

FIGURE 1 illustrates a telecommunication network indicated generally at 10, which provides for network elements that allow for the sharing of telecommunications facilities that connect to customer premises. Referring to FIGURE 1, a customer building 12 is illustrated as an exemplary high-rise office building. Building 12 may comprise a business, a home, a complex of many businesses or residences or any other premises with persons needing telecommunications, voice or data services. The building 12 contains a plurality of tenants, each of which might have different needs for telecommunication, voice, video, and data services. In the past, providing high bandwidth telecommunication, voice and data services to buildings has been problematic because the terminal connection to the building has either been unavailable or uneconomical to provide. In this respect, the terminal link or connection refers to the telecommunications pathway that physically connects the premises to the remainder of the telecommunication network. This terminal link is sometimes referred to as the "last mile" in telecommunications jargon because it is typically the least convenient and most expensive portion of the network to construct or upgrade. Recently, new techniques in providing this "last mile" connection have enabled buildings to receive fiber optic or other high bandwidth connections which may be used by customers within the building.

Referring to FIGURE 1, a terminal time division multiplexed (TDM) link 14 and a terminal packet link 16 are shown which connect premises equipment associated with building 12 to a terminal exchange facility indicated generally at 18 in FIGURE 1. TDM traffic may comprise voice traffic, data traffic, video services, or combinations thereof that are time multiplexed on these transmission channels. Terminal links 14 and 16 may comprise, for example, high bandwidth fiber optic connections. Terminal links 14 and 16 may be installed using, for example, the techniques provided by CityNet, Inc. by installing fiber optic cable through stainless steel conduits placed in sewer lines which are in part proximate the buildings or residences to be connected. As such, the network 10 shown in FIGURE 1 illustrates the terminal links 14 and 16 passing through a sewer network indicated at 20. According to the embodiment shown in FIGURE 1, if a building such as building 12 is near a sewer line which has been used to route terminal links, the building 12 can be linked to the terminal links by connecting to the terminal links through the wall of the sewer pipe and installing and connecting the fiber optic cables to optical multiplexing equipment associated with the building 12. The teachings of the present invention are not limited to the use of any physical connection or routing modality. If sewer lines are unavailable or uneconomical, routing using other signaling techniques or through other physical modalities such as power lines or other installed facilities are equally applicable and any suitable conduit for logically linking transmission facilities will enable the architecture described herein. In addition, two example implementations according to the teachings of the invention are described in detail in the context of TDM and packet-based communications; however, the teachings of the invention are also applicable to other types of communications, including TDM-like communications, including STDM and MSD, ATM, and WDM-like communications, including DWDM and CWDM. The identification of particular commercial products below is intended for example purposes only and is not intended to limit the teachings of the invention to any one commercial implementation.

Referring to FIGURE 1, a premises TDM multiplexer 22 is connected to terminal link 14. Similarly, a premises packet router 24 is connected to terminal link 16. TDM multiplexer 22 may comprise, for example, a 1603 SMX SONET multiplexer manufactured by Alcatel Corporation which is capable of multiplexing and de-multiplexing SONET telecommunications traffic into any number of telecommunication service facilities, such as DS1, DS3, and other levels of telecommunication service; however, any multiplexer operable to perform TDM multiplexing may be used. The TDM multiplexer 22 is, therefore, coupled to a patch panel 26 which serves as an interface point for the internal facilities indicated generally at 28 of building 12. Internal facilities 28 may comprise additional fiber optic or copper lines running through building 12 and available to connect customers within building 12 to patch panel 26.

According to one embodiment of the present invention, TDM multiplexer 22 is installed as an expandable system with a back plane and rack which is configured to receive service packs of service interface cards as needed by the tenants of building 12. For example, if a particular tenant of building 12 required DS3 voice service, the TDM multiplexer 22 would receive a single card or a number of interface cards which would then be connected to the patch panel 26. The cabling within building 12 could then be connected as needed to patch panel 26 to provide the DS3 service to the appropriate tenant.

A similar architecture is used to provide packet services to the tenants of building 12. As shown in FIGURE 1, a packet router 24 is connected to the terminal link 16 to provide these services. The packet router 24 may comprise, for example, a 6024 internet protocol router manufactured by Alcatel Corporation; however any router operable to route packets may be used. This multiplexer is operable to receive very high bandwidth IP traffic from terminal link 16 and multiplex and de-multiplex that traffic into various service levels that can be connected to tenants through patch panel 26. For example, if a particular tenant within building 12 desired 100 Mbps fast Ethernet service, the appropriate cabling within the building 12 could be attached to the patch panel 26. The appropriate interface cards could then be installed in packet router 24 and the appropriate channels can be provisioned within terminal link 16.

As shown in FIGURE 1, the terminal network, indicated generally at 21, within conduit system 20 is able to connect to a plurality of buildings, such as additional buildings 30 and 32 as shown in FIGURE 1. The terminal network 21 within conduit system 20, comprising terminal links 14 and 16, is ordinarily installed with a great deal of excess bandwidth and, in the case of fiber optic communications, with fiber optic facilities which are not used and are said to be "dark fiber." This is due to the fact that the expense of installing excess fiber is not large once a single fiber is to be installed. Accordingly, the dark fiber facilities within the terminal network within conduit system 20 stand ready to provide customers service as buildings that use the conduit system 20 desire to be connected to high bandwidth telecommunication, data and voice services. Commercially, in the past, this has been problematic because the installation of these last mile, high bandwidth transmission facilities is expensive and commercially risky. According to the architecture of the present invention, this risk and expense can be allocated over many different customers within the buildings and, as will be discussed herein, can be allocated over many different telecommunication service providers. This flexibility is provided by the use of routing, switching, and cross connect facilities at strategic points within and on the periphery of the terminal network 21.

The terminal links 14 and 16 are also connected to a terminal exchange facility 18 shown in FIGURE 1. The terminal TDM link 14 is connected to a TDM cross connect system 34 disposed at terminal exchange facility 18. TDM cross connect system 34 may comprise, for example, a 1680 OGX optical cross connect system manufactured by Alcatel Corporation; however, any cross connect system operable to provide interconnection of channels in TDM communication may be used. The TDM cross connect system 34 terminates fiber optic lines and provides for interconnection of channels encoded within the signals traveling on such fiber optic lines. The TDM cross connect system 34 is administered by the combination of a TDM multiplexer 36 and a TDM administration system 38. TDM multiplexer 36 may comprise an additional 1603 SMX SONET multiplexer system manufactured by Alcatel Corporation; however, other TDM multiplexers may be used. TDM administration system 38 may comprise, for example, a 1301 administration system manufactured by Alcatel Corporation; however, other TDM administration systems may be used. The TDM multiplexer 36 operates to receive telecommunication channels with signaling and administration, provisioning, and maintenance information encoded within the channels. The TDM multiplexer 36 decodes these signals and passes the administration, provisioning, and maintenance information from the signals. This administration, provisioning and maintenance information can then be processed by TDM administration system 38. In this manner, a user operating TDM administration system 38 can provision network elements, such as TDM multiplexer 22 and TDM cross connect system 34 by inserting provisioning commands and maintenance commands into the traffic processed by TDM cross connect system 34. A wavelength, OEO, or OOO cross connect system may also be used in place of, or in addition to, TDM cross connect system 34.

Similarly, terminal packet link 16 is connected to a packet router 40 resident in terminal exchange facility 18. Packet router 40 is managed by a packet administration system 42. Packet router system 40 may comprise, for example, an 8600 internet protocol router system manufactured by Alcatel Corporation, or other suitable router. Packet administration system 42 may comprise the operation and administration, maintenance, and provisioning capacity of the packet router system 40. In a similar manner to that described with reference to the voice traffic, data channels can be provisioned and connected by packet router 40 through the use of packet administration system 42. Provisioning and administration commands can be input into the packet data stream through packet router 40 and can be used to configure or provision data transmission channels in network elements, such as packet router 24. Packet and TDM networks may be interconnected in order to support transitions between network technologies that meet specific customer expectations, as illustrated in FIGURE 1.

Terminal exchange facility 18 and the elements resident therein function to interconnect various customer facilities, such as buildings 12, 30, and 32 and the tenants resident in these buildings to various telecommunication service providers such as an first interexchange carrier (1xC1), a second interexchange carrier (1xC2) 56, an incumbent local exchange carrier (ILEC) 57 and a competitive local exchange carrier (CLEC) 58 as shown in FIGURE 1. In general, each of these carriers have access to a core telecommunication network which typically comprises very high bandwidth transmission facilities, such as inter-regional, interstate, and international fiber optic cable, microwave and satellite transmission systems. These are commonly referred to as their core networks. A technical and economic challenge of these exchange carriers is their ability to efficiently and economically connect their core networks to particular customers within localities or buildings. Typically, an exchange carrier will have a point of presence in a particular locality, such as the point of presence 44 associated with the first interexchange carrier shown in FIGURE 1. According to the embodiment of the architecture shown of the present invention shown in FIGURE 1, this point of presence 44 can be connected to the terminal network 21 within conduit system 20 at a point within network 21 that is proximate point of presence 44. The connection of the core network of the first interexchange carrier is accomplished through a patch panel 46, a TDM multiplexing system 48 and a packet router system 50 connected as shown in FIGURE 1.

According to one embodiment of the present invention, TDM multiplexing system 48 may comprise, for example, a 1603 SMX SONET multiplexing system manufactured by Alcatel Corporation; however, other multiplexing systems may be used. Further, according to one embodiment of the present invention, packet router system 50 may comprise, for example, a system 8000 internet protocol router manufactured by Alcatel Corporation; however, other packet routing systems may be used. TDM multiplexer system 48 is connected to a terminal link 52 which comprises a portion of the terminal network 21 disposed in conduit system 20. Similarly, packet router system 50 is connected to a terminal link 54 which also comprises a portion of the terminal network 21 resident in conduit system 20. Links 52 and 54 may comprise, for example, fiber channels within the fiber optics laid within conduit system 20 and serve to connect the facilities associated with the first interexchange carrier to the facilities within terminal exchange facility 18. Identical or substantially similar systems can be provided for a second interexchange carrier indicated at 56 and the ILEC 57 and CLEC 58 carriers indicated in FIGURE 1.

As discussed with reference to TDM multiplexer 22 previously, TDM multiplexer 48 may comprise an expandable and configurable system that provides basic power and back plane operations to modular interface cards that are deployed as particular services are desired. For example, if the first interexchange carrier needed to have a particular level of optical service, for example an OC12 service, the appropriate interface cards would be deployed in TDM multiplexer 48 and the patch panel 46 would be used to connect a portion of the interexchange carrier network present at point of presence 44 to the TDM multiplexer system 48. The TDM multiplexer system 48 would then multiplex this particular channel of telecommunications traffic onto the terminal link 52. This traffic would then pass to the TDM cross connect system 34 where it would be connected to the appropriate links to a customer or customers within buildings 12, 30 or 32. TDM multiplexer 48 may be configured, provisioned and maintained through the use of TDM administration system 38.

Similarly, a particular packet service may be offered by the first interexchange carrier by interconnecting to an appropriate interface card or set of cards within packet router system 50. The packet router system 50 may then connect this packet traffic received from the patch panel 46 to the terminal link 54 where the traffic may be routed to the packet router system 40 within terminal exchange facility 18. The packet router system 40 may then interconnect the appropriate channels to links associated with customers within buildings 28, 30 or 32. Similarly, the packet router system 50 can be maintained, provisioned and configured using commands from the packet administration system 42 within terminal exchange facility 18.

While the terminal network 21 is described in one embodiment herein as comprising fiber optic cable, for example, deployed through a city sewer system, it should be understood that other methods of spanning the last mile and constructing the terminal network are equally applicable. For example, the link between the terminal exchange facility 18 and the buildings 12, 30 and 32 and the interexchange carriers 44, 56 and 58 may comprise other high bandwidth connection technologies, including leased private line or data service, microwave links, radio links, laser transmissions through the atmosphere on a line of sight basis, or other currently-existing or future transmission technologies.

The architecture described with reference to FIGURE 1 presents several substantial commercial advantages when compared to conventional architectures. The use of cross connect and multiplexing facilities at the buildings to be connected and at the interexchange carriers point of presence provide that any tenant within a building can be connected to any telecommunication service provider that has reasonable access to the terminal network. In the embodiment disclosed, the terminal network is resident within a city sewer system, for example. In this case, it is highly likely that a point of presence associated with a telecommunication service provider will be near a city sewer that has been or may be enhanced to contain suitable fiber optic facilities. From a commercial prospective, the fact that the multiplexing systems, cross connect systems and terminal networks are controlled, owned and provisioned by a party (or parties) that may act as an intermediary between the various exchange carriers and the ultimate customers provides for important operational and economic benefits. This intermediary party acts to provision, maintain, and operate the terminal network but also acts as a marketing interchange to allow different companies to provide different customers telecommunications service within the same building or premises by leasing or otherwise providing portions of the terminal network to the different companies. In this manner, the cost of the terminal network and the interconnect and multiplexing equipment does not need to be borne by a single carrier company or the owner of a single building or premises. In prior architectures, an owner of a building or an exchange company alone would have to take the risk of building the terminal network and in many cases this risk was prohibitive because the owner of the building or the exchange carrier could not prospectively guarantee that there would be sufficient traffic to justify the capital costs of installing the terminal network.

An additional technical and commercial advantage of the architecture of the present invention inheres in the fact that the multiplexing systems, routing systems and interconnect systems may be deployed using scalable architectures. The various routing and cross connect systems described herein have been presented for purposes of teaching the present invention in part because they comprise basic back plane and power supply facilities which may be enhanced through the use of appropriate modular interface cards as facilities are needed. In this manner, provisioning and configuration of the systems can be accomplished on an "as-needed" basis and the initial capital costs in building the network are minimized.

In contrast, the transmission facilities within the terminal network are deployed in a manner that guarantees sufficient capacity over time. Specifically, in the embodiment described herein, the terminal network 21 within the conduit system 20 may comprise a portion of a fiber optic deployment which comprises initially a relatively large quantity of dark fiber. This is due to the fact that the deployment of a single fiber and the deployment of a large amount of fiber within a particular network are not dramatically different in terms of cost. Most of the costs in the deployment of the terminal network involves access to the physical space required for the network. In this particular implementation, the physical space may comprise the city sewer system. Once that physical space is allocated, it costs very little more to deploy a great deal of dark fiber. Accordingly, the costs and risks of deploying the network are controlled by minimizing the capital exposure within the deployment of the intelligent multiplexing and interconnect systems.

Although the present invention has been described in detail, it should be understood the various modifications, changes, alterations and substitutions to the teachings herein may be made without departing from the spirit of the present invention which is solely defined by dependent claims.

## Claims

1. A telecommunication system, comprising:
a cross connect system operable to be coupled to a terminal link;
a premises multiplexer operable to be connected between the terminal link and a premises network associated with a plurality of customers utilizing the premises network for telecommunications service; and
a first carrier multiplexer system operable to be coupled to the cross connect system and operable to connect a first plurality of telecommunications channels associated with a first core telecommunications network associated with a first carrier to the cross connect system such that the channels may be used to carry telecommunications traffic for selected ones of the plurality of customers.

2. The system of Claim 1 and further comprising:
a second carrier multiplexer operable to be coupled to the cross connect system and operable to connect a second plurality of telecommunications channels associated with a second core telecommunications network associated with a second carrier to the cross connect system such that the second plurality of channels may be used to carry telecommunications traffic for selected ones of the customers.

3. The system of Claim 2 wherein the data routers comprise routers operable to communicate Internet Protocol data packets.

4. The system of Claim 1 wherein the terminal link, premises multiplexer, cross connect system and first carrier multiplexer each comprise SONET/SDH transmission systems operable to process voice traffic encoded in SONET-SDH format.

5. The system of Claim 1 wherein the terminal link comprises a fiber optic cable.

6. The system of Claim 5 wherein the fiber optic cable is routed from the cross connect system to the premises multiplexer through a sewer line.

7. The system of Claim 1 wherein the premises multiplexer comprises a back plane operable to receive and couple to interface cards, the interface cards operable to deliver selected grades of telecommunications services.

8. The system of Claim 1 and further comprising an administration system coupled to the cross connect system and operable to transmit provisioning messages to the cross connect system and the multiplexer systems, the provisioning messages comprising commands operable to cause the creation of telecommunication service pathways for the selected ones of the plurality of customers.

9. The system of Claim 1 wherein the terminal link comprises a radio signal.

10. The system of Claim 1 wherein the terminal link comprises a laser signal transmitted through the atmosphere.

11. A method of distributing usage of a telecommunication system terminal link between multiple carriers and multiple customers, comprising:
multiplexing telecommunications traffic from each of the customers on to a different one of multiple telecommunication channels carried by the terminal link;
cross-connecting at the terminal link each of the channels to a different core telecommunications network associated with a selected one of the carriers,
whereby usage of the terminal link may be marketed as a resource to be shared by the carriers.

12. A method for addressing last mile communications, comprising:
providing a terminal link terminating in proximity to a plurality of customers for selectively connecting each of the customers to respective selected ones of a plurality of telecommunications carriers;
coupling the termination of the terminal link to each of the plurality of customers;
providing access to the terminal link to a plurality of different core telecommunications networks each associated with a respective different telecommunications carrier; and
charging each of the telecommunications carriers for the provided access to the terminal link, thereby spreading the cost of investment in the terminal link over the plurality of telecommunications carriers and enabling last mile communication with the plurality of customers.

13. The method of Claim 12, and further comprising:
connecting, through the terminal link, each of the plurality of customers to respective selected ones of the plurality of telecommunications carriers; and
disconnecting at least one of the customers from the customer's respective telecommunications carrier and connecting the customer to a different one of the telecommunications carriers through the terminal link.

14. A method for providing telecommunications services to a plurality of customers comprising:
receiving at a terminal link selectively routed telecommunications traffic associated with each of a plurality of customers; and
providing access to the terminal link by a crossconnect system to a plurality of core telecommunications networks associated with respective different telecommunications carriers, thereby enabling the plurality of telecommunications carriers to share access to the plurality of customers by the terminal link and spread out infrastructure costs associated with the terminal link to a plurality of parties.
